# EUROPEAN PATENT APPLICATION

(11) **EP 4 575 842 A1**
(43) Date of publication of application: **25.06.2025**
(21) Application number: 23854309.4
(22) Date of filing: 10.08.2023
(51) Int. Cl.: G06F 16/957

(54) **MEDIA CONTENT PUBLISHING METHOD AND APPARATUS AND COMPUTER-READABLE STORAGE MEDIUM**

(30) Priority: 18.08.2022 CN 202210992340
(71) Applicant: DOUYIN VISION CO., LTD., Beijing 100041 (CN); Lemon Inc., Grand Cayman, KY1-1205 (KY)
(72) Inventor: YANG, Chenjian, Beijing 100028 (CN); TAN, Siqi, CULVER CITY California 90230 (US); TONG, Ziyi, Beijing 100028 (CN); SEKHRI, Aaron, CULVER CITY California 90230 (US); GISH, Riley, CULVER CITY California 90230 (US)
(74) Representative: Dentons UK and Middle East LLP
(86) International application number: PCT/CN2023/112156
(87) International publication number: WO 2024/037407

(57) **Abstract**

The present disclosure relates to the technical field of multimedia, and relates to a media content publishing method and apparatus and a computer-readable storage medium. The media content publishing method comprises: acquiring first media content to be published by a user; generating a link associated with the first media content, wherein the link points to the user's media content set to be unlocked, and the media content set includes one or more pieces of second media content; and publishing into a feed the first media content carrying the link.

## Description

### CROSS-REFERENCE TO RELATED APPLICATIONS

The present application is based on and claims priority to China Patent Application No. 202210992340.1 filed on August 18, 2022, the disclosure of which is incorporated by reference herein in its entirety.

### TECHNICAL FIELD

The present disclosure relates to the field of multimedia, in particular to a publishing method, apparatus of media content and computer-readable storage medium.

### BACKGROUND

A feed comprises a plurality of media contents. Users can quickly switch between different media contents through switching operations such as sliding on the screen to find contents they are interested in.

### SUMMARY

According to a first aspect of some embodiments of the present disclosure, there is provided a media content publishing method, comprising: acquiring a first media content to be published by a user; generating a link associated with the first media content, wherein the link directs to a media content collection to be unlocked of the user, and the media content collection comprises one or more second media contents; and publishing the first media content with the link to a feed.

In some embodiments, the generating a link associated with the first media content comprises: acquiring the media content collection selected by the user; generating the link according to the media content collection selected by the user; and displaying the link in a publishing interface of the first media content.

In some embodiments, the acquiring a media content collection selected by the user comprises: displaying one or more media content collections of the user in response to a control for adding a link in the publishing interface being triggered by the user, wherein each of the media content collections has a Selection control; and acquiring the media content collection selected by the user in response to a Selection Confirmation control being triggered by the user.

In some embodiments, the displaying the link in a publishing interface of the first media content comprises: displaying a Link control in the publishing interface of the first media content, wherein the Link control comprises partial or complete of a title of the media content collection selected by the user.

In some embodiments, the publishing method further comprises: publishing the media content collection before generating the link associated with the first media content.

In some embodiments, the publishing the media content collection comprises: acquiring first attribute information input by the user for the media content collection; acquiring the second media content(s) uploaded by the user; and publishing the media content collection comprising the first attribute information and the second media content(s).

In some embodiments, the publishing method further comprises: displaying a real-time preview interface of the media content collection before publishing the media content collection comprising the attribute information and the second media content.

In some embodiments, the displaying a real-time preview interface of the media content collection comprises: updating the preview interface of the media content collection in response to a detection of the user's operation of inputting the first attribute information or uploading the second media content.

In some embodiments, the preview interface is a preview of a display interface of the media content collection after an interactive operation on the link is performed by a viewer of the first media content.

In some embodiments, the attribute information of the media content collection comprises at least one of a title, a redeemable resource, a description or a cover.

In some embodiments, in a case where the attribute information of the media content collection comprises a redeemable resource, the acquiring first attribute information input by the user for the media content collection comprises: displaying one or more Resource controls corresponding to different redeemable resource values, wherein each of the Resource controls comprises information determined from a geographic location and a corresponding redeemable resource value of the user; and acquiring a redeemable resource value corresponding to the Resource control selected by the user.

In some embodiments, the acquiring second media content(s) uploaded by the user comprises: displaying an Upload control and first entry component(s) of the uploaded second media content(s) in an uploading interface of the second media content(s), wherein the first entry component comprises an Edit control; acquiring the second media content(s) uploaded by the user in response to triggering the Upload control by the user; and acquiring second attribute information set by the user for the corresponding second media content(s) in response to the triggering of the Edit control by the user.

In some embodiments, the second attribute information comprises a cover, and the acquiring second attribute information set by the user for the corresponding second media content comprises: displaying one or more frames of the corresponding second media content; and determining a frame selected by the user as a cover of the corresponding second media content.

In some embodiments, the publishing method further comprises: displaying a state of the media content collection in a first management interface of the user's media content collection; and displaying a state of each second media content in the media content collection in a second management interface of the user's media content collection.

In some embodiments, the displaying a state of each second media content in the media content collection in a second management interface of the user's media content collection comprises: displaying a second entry component of the one or more second media contents in the media content collection in the second management interface of the media content collection of the user, wherein the second entry component comprises a State control; and in a case where the State control represents a determined state, displaying the reason why a corresponding second media content is in the preset state in response to an interaction of the user with the State control being in a preset manner.

In some embodiments, the first media content and the second media contents are videos.

According to a second aspect of some embodiments of the present disclosure, there is provided a publishing apparatus of media content, comprising: memory; a processor coupled to the memory, the processor configured to, based on instructions stored in the memory, carry out any one of the foregoing publishing methods of media content.

According to a third aspect of some embodiments of the present disclosure, there is provided a computer-readable storage medium on which a computer program is stored, wherein the program when executed by a processor carries out any one of the foregoing publishing methods of media content.

According to a fourth aspect of some embodiments of the present invention, there is provided a computer program product, which when executed on a computer causes the computer to implement any one of the foregoing publishing methods of media content.

According to a fifth aspect of some embodiments of the present invention, there is provided a computer program including: instructions that, when executed by a processor, cause the processor to perform any one of the foregoing publishing methods of media content.

Other features and advantages of the present invention will become apparent from the following detailed description of exemplary embodiments of the present disclosure with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 shows an exemplary flow diagram of a publishing method of media content according to some embodiments of the present disclosure;
FIG. 2A shows a schematic diagram of a publishing interface of a first media content according to some embodiments of the present disclosure;
FIG. 2B shows a schematic diagram of a media content collection selection interface after an Add Link control is triggered according to some embodiments of the present disclosure;
FIG. 2C shows another schematic diagram of a publishing interface of a first media content according to some embodiments of the present disclosure;
FIGS. 3A to 3D show schematic diagrams of several user interfaces for accessing media contents according to some embodiments of the present disclosure;
FIG. 4A shows an exemplary flow diagram of a media content collection publishing method according to some embodiments of the present disclosure;
FIGS. 4B to 4E show schematic diagrams of publishing interfaces of a media content collection according to some embodiments of the present disclosure;
FIGS. 5A and 5B show schematic diagrams of a second management interface of a media content collection according to some embodiments of the present disclosure;
FIG. 6 shows an exemplary structural diagram of a media content publishing apparatus according to some embodiments of the present disclosure;
FIG. 7 shows an exemplary structural diagram of a media content publishing apparatus according to other embodiments of the present disclosure;
FIG. 8 shows an exemplary structural diagram of a media content publishing apparatus according to still other embodiments of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and numerical values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an article is defined in a drawing, there is no need for further discussion in the accompanying drawings.

After analyzing the relevant technologies, the inventors have found that, for video collections published by some creators on long video platforms, users need to unlock these video collections for viewing videos. Users of long video platforms usually need to view some promotional videos of these video collections, or learn about the video contents on other platforms before logging into the long video platforms to unlock the video collections, thereby relevant information can only be learned from limited channels.

The present disclosure provides a publishing method of media content, apparatus and computer-readable storage medium, which can expand the information distribution channels of media contents.

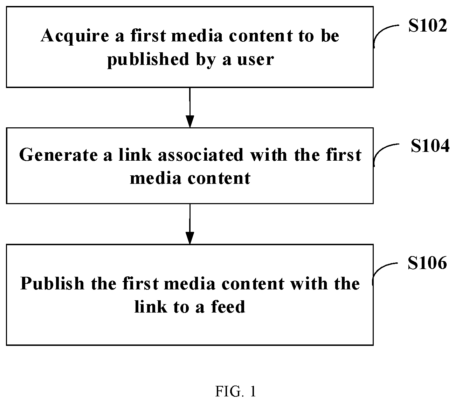

FIG. 1 shows an exemplary flow diagram of a publishing method of media content according to some embodiments of the present disclosure. As shown in FIG. 1, the publishing method of media content of this embodiment comprises steps S102 to S106.

In step S102, a first media content to be published by a user is acquired.

In some embodiments, the first media content is a video.

In some embodiments, the first media content is a video having a duration less than a determined duration, that is, a short video.

Of course, the scope of the present disclosure is not limited thereto. For example, the first media content may also comprise other types of media content.

In step S104, a link associated with the first media content is generated, wherein the link directs to a media content collection to be unlocked of the user, and the media content collection comprises one or more second media contents.

The media content collection to be unlocked refers to a media content collection that needs to be unlocked by using redeemable items, for example, a media content collection that needs to be redeemed by using some redeemable resources. In some embodiments, the media content collection to be unlocked needs to be unlocked after payment.

In some embodiments, the second media content is a video. In this case, the media content collection is a video collection. Of course, the scope of the present disclosure is not limited thereto. For example, the media content collection may also comprise other types of media content collection, such as an audio collection.

The first media content is a media content independent of the media content collection, which may have content relevance with the media content collection, such as a clip of a second media content in the media content collection or an edited result of multiple clips, to introduce the media content collection and guide viewers to unlock the media content collection.

In step S106, the first media content with the link is published to a feed.

The feed comprises a plurality of media contents, and a user can switch the media contents through an operation, such as sliding on a screen.

In some embodiments, the feed is a short video feed, comprising a plurality of videos having durations less than a determined duration.

When a viewer browses the first media content with the link in the feed, the media content collection to be unlocked can be presented to the viewer by triggering the link. After the viewer unlocks the media content collection, the viewer can watch or listen to the second media content.

In the above embodiment, the first media content with the link is published to a feed, wherein the link directs to a media content collection to be unlocked. This embodiment can use media contents in the feed to guide a viewer of the feed to the media content collection. By browsing media contents in the feed, the viewer can quickly understand the media content collection, and unlock and browse the media content collection when interested. Thus, the information distribution channel of the media content collection can be expanded and the unlocking rate of the media content collection is improved.

In some embodiments, the link associated with the first media content can be generated in the following way: acquiring the media content collection selected by the user; generating the link according to the media content collection selected by the user; and displaying the link in a publishing interface of the first media content.

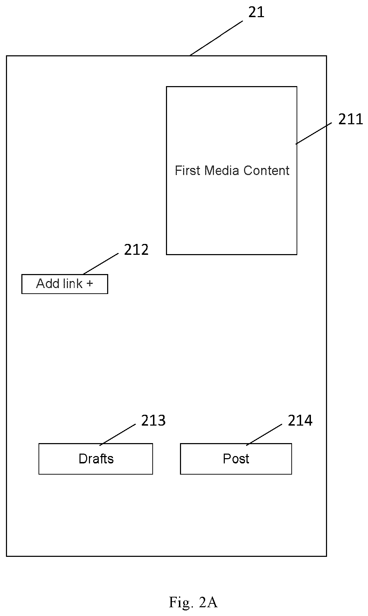

FIGS. 2A to 2C show an exemplary process of generating a link.

FIG. 2A shows a schematic diagram of a publishing interface of the first media content. In FIG. 2A, the publishing interface 21 is provided with a plurality of controls, such as a First Media Content control 211, an Add Link control 212, a Save as Draft control 213, and a Publish control 214.

The First Media Content control 211 displays information about the first media content uploaded by the user, such as its cover.

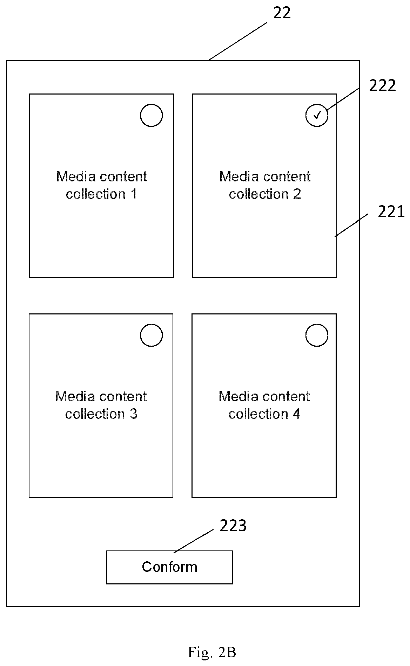

The Add Link control 212 is used to trigger the process of adding a link associated with the first media content. FIG. 2B shows a schematic diagram of a media content collection selection interface after the Add Link control is triggered.

In some embodiments, one or more media content collections of a user are displayed in response to the user triggering the Add Link control 212 in the publishing interface 21, for example, Media Content Collection controls corresponding to media content collections 1 to 4 are displayed through the media content collection selection interface 22. Each media content collection has a Selection control. Taking a media content collection 2 as an example, the Media Content Collection control 221 displays information of the published media content collection 2, such as a cover, a title, a price, a duration, or a score, etc. A Selection control 222 is provided over the Media Content Collection control 221, which is used to indicate whether the user has selected the corresponding media content collection. FIG. 2B illustrates that, a checked icon appears in the Selection control 222 if the media content collection 2 is selected, while the Selection controls corresponding to other unselected media content collections do not have checked icons.

The media content collection selected by the user is acquired in response to a user triggering the Selection Confirmation control. For example, when the user triggers the Confirmation control 223, the selection of the media content collection 2 is confirmed. The text in the Selection Confirmation control can be set as needed, for example, "Confirm", "Add to first media content", and so on.

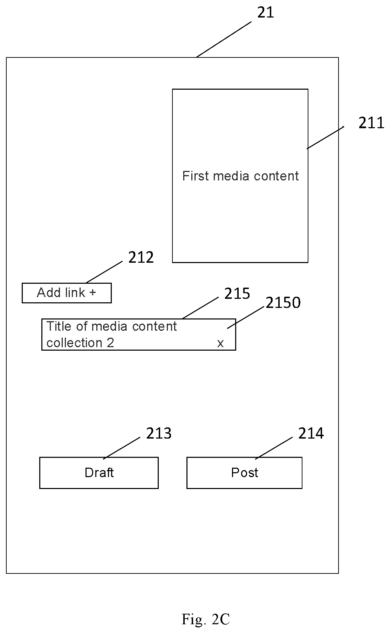

Then, the display returns to the publishing interface 21. FIG. 2C shows a schematic diagram of a publishing interface of the first media content to which a link has been added. Compared with FIG. 2A, a Link control 215 is added in publishing interface 21.

In some embodiments, the Link control comprises partial or complete of a title of the media content collection selected by the user. For example, the title can be truncated if the length of the title is greater than a preset length.

In some embodiments, the link is deleted in response to a preset deletion operation performed on the Link control. For example, the Link control 215 is deleted in response to clicking a Delete sub-control 2150 in the Link control 215. The publishing interface 21 after the Link control 215 is deleted is shown in FIG. 2A.

After the user confirms the added link and other publishing settings of the first media content (not shown in the figure), the user can trigger the Publish control 214 in the publishing interface 21 shown in FIG. 2C to publish the first media content with the link to a feed. If the user triggers the Publish control 214 in the publishing interface 21 shown in FIG. 2A, the first media content having no link added is published to a feed.

If the user does not want to publish the first media content for now, the Save as Draft control 213 can be triggered, and information added and set in the publishing interface 21 will be temporarily saved.

Below, a browsing process of a viewer will be described.

In some embodiments, the media content collection to be unlocked is displayed in response to an interactive operation on a user interface, wherein the user interface is configured to display the first media content in a feed; and the unlocked media content collection is displayed in response to an operation for unlocking the permission to access the media content collection.

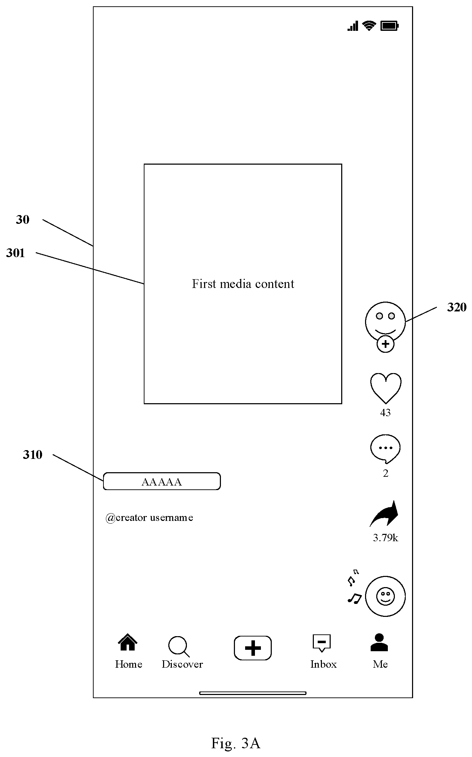

FIGS. 3A to 3D show schematic diagrams of several user interfaces for accessing media contents according to some embodiments of the present disclosure. Referring to FIGS. 3A to 3D, a process of accessing a media content collection using the Link control in the user interface, and a subsequent process of unlocking the media content collection will be described below.

First, as shown in FIG. 3A, a first interface of viewer 30 is displayed, which comprises a first media content 301, a Link control 310, and a Creator Home Page control 320. For example, the first media content is a short video. In a feed browsing process, a user reaches the first media content 301 and the Link control 310. The title of the directed media content collection is displayed on the Link control, such as the title "AAAAA" shown in FIG. 3A.

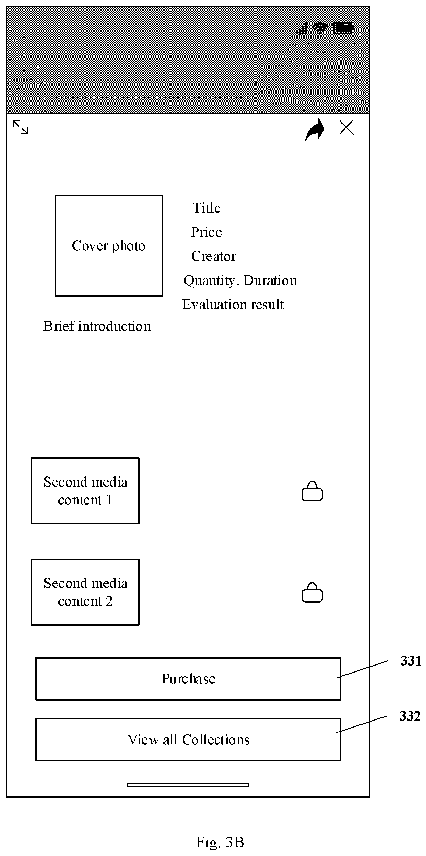

Next, a media content collection to be unlocked is displayed in response to an interactive operation on the Link control 310 in the first browser interface 30. For example, the interactive operation comprises a clicking or long pressing operation. For example, after the user clicks on the Link control 310, the user interface shown in FIG. 3B (also known as a second interface of viewer) is displayed. As shown in FIG. 3B, the second interface of viewer comprises one or more second media contents in the media content collection to be unlocked. In addition, the second interface of viewer also displays a cover picture of the media content collection (i.e. the cover of the media content collection), a title, a price, a creator, a number of second media contents, a duration and a review result (such as a score and/or a rate), etc. Here, the creator is the original author who publishes the first media content and media content collection.

Moreover, as shown in FIG. 3B, the second browser interface also comprises an Unlock control. For example, the Unlock control is a Purchase control 331. As shown in FIG. 3B, the second browser interface also comprises a View All Collections control 332. All collections can be viewed in response to an interactive operation (such as a click operation, etc.) on the View All Collections control 332.

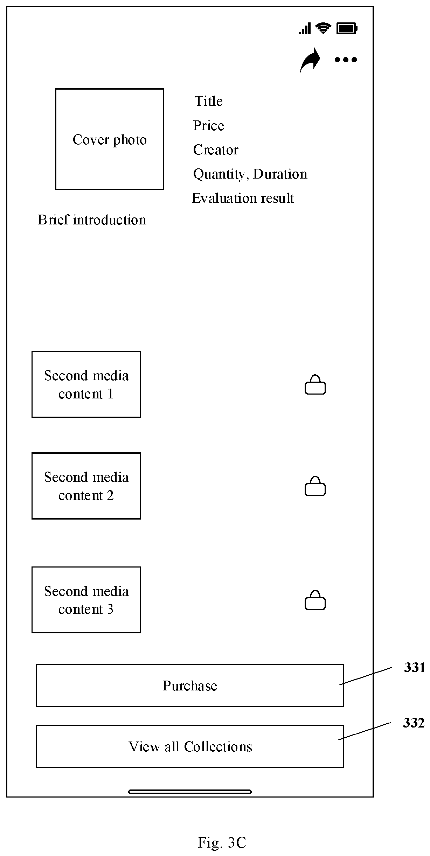

After an up-slide operation on the second browser interface, the user interface shown in FIG. 3C can be obtained, so that more second media contents can be browsed. All the second media contents in the media content collection can be displayed in a form of a media content list (such as a video list).

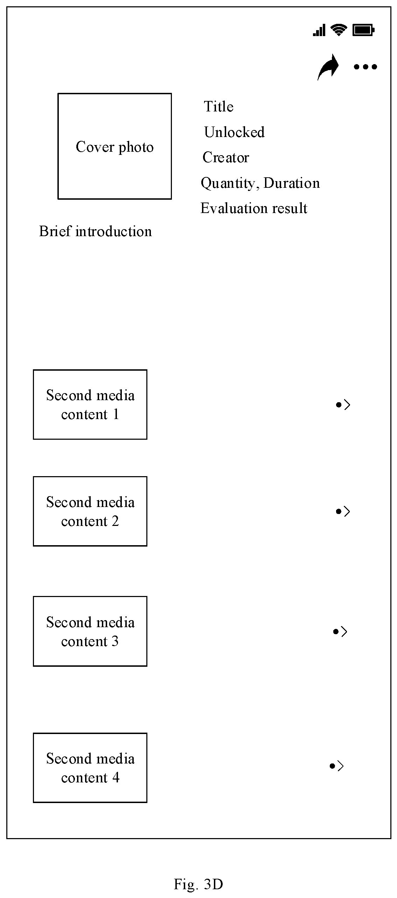

Next, the media content collection is unlocked in response to an interactive operation on the Unlink control. For example, the Purchase control 331 can be clicked to get the unlocked media content collection through payment, as shown in FIG. 3D. At this point, the media content collection has been unlocked.

Heretofore, the process of accessing a media content collection by means of the Link control in the user interface, and the subsequent process of unlocking the media content collection have been described. In this embodiment, a media content collection can be browsed conveniently through the Link control, and can be unlocked easily through the Unlock control, which can improve the user experience.

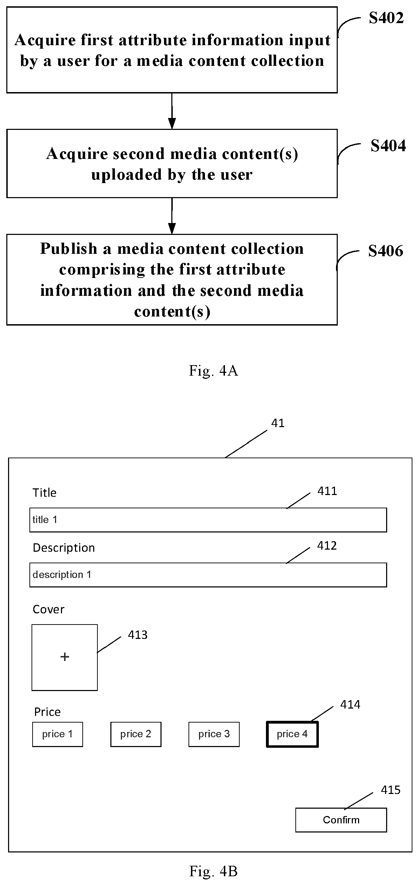

In some embodiments, the media content collection is published before generating the link associated with the first media content. That is, the first media content and the media content collection are published independently. FIG. 4A shows an embodiment of a method for publishing a media content collection.

FIG. 4A shows an exemplary flow diagram of a media content collection publishing method according to some embodiments of the present disclosure. As shown in FIG. 4A, the media content collection publishing method of this embodiment comprises steps S402 to S406.

In step S402, first attribute information input by a user for a media content collection is acquired.

In some embodiments, the attribute information of the media content collection comprises at least one of a title, a redeemable resource, a description or a cover. The redeemable resource is a resource represented by price, points or other redeemable items.

In step S404, second media content(s) uploaded by the user are acquired.

In step S406, a media content collection comprising the first attribute information and the second media content(s) is published.

FIGS. 4B to 4E show schematic diagrams of publishing interfaces of a media content collection according to some embodiments of the present disclosure.

FIG. 4B shows an exemplary schematic diagram of a first publishing interface for a media content collection. As shown in FIG. 4B, the first publishing interface 41 of the media content collection comprises an Input Title control 411, a Description control 412, a Cover control 413, a Price control 414, and a Confirmation control 415.

In some embodiments, there may be one or more Resource controls, such as Price controls 414. Each Resource control comprises information determined from a geographic location and a corresponding redeemable resource value; then, a redeemable resource value corresponding to the Resource control selected by the user can be acquired.

Taking the Price control 414 as an example, a price that the user wants to set for the media content collection can be displayed thereon. In some embodiments, a first currency representation and a second currency representation corresponding to price 2 can be displayed on the control simultaneously. The first currency representation is a price in a default currency. The second currency representation is a price converted from the first currency using a real-time exchange rate corresponding to the user's address location. Thus, it can facilitate the use of users in different areas.

After the user inputs information through controls 411 to 414, a second publishing interface can be entered through the Confirmation control 415.

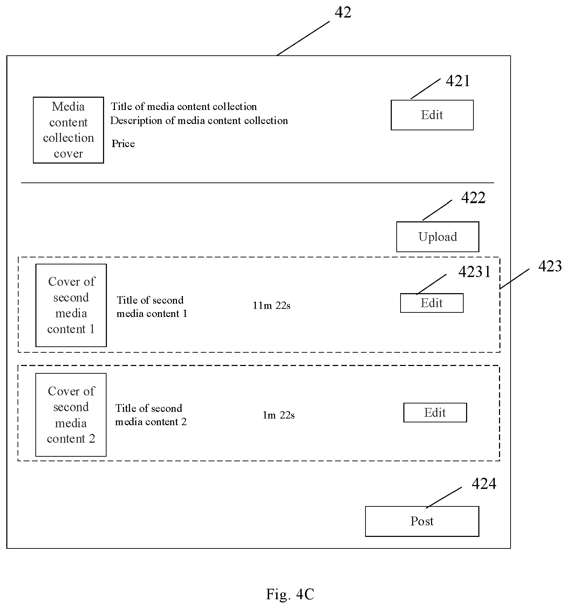

FIG. 4C shows an exemplary schematic diagram of a second publishing interface for a media content collection. As shown in FIG. 4C, the second publishing interface 42 of the media content collection comprises the first attribute information such as the cover, title, description, and redeemable resource of the media content collection that has been entered in the first publishing interface 41. The first attribute information can be further edited by using the Edit control 421. The second publishing interface 42 further comprises an uploading interface for second media contents, comprising an Upload control 422 and a first entry component 423 for uploaded second media content(s).

Second media content(s) uploaded by the user are acquired in response to triggering the Upload control 422 by the user. The user can select second media content(s) to be uploaded locally or from the network. The way of uploading is not limited in this disclosure, for example, uploading can be completed by dragging a second media content to be uploaded to a designated region of the uploading interface.

The first entry component 423 comprises second attribute information such as a cover and a duration of each second media content, and can also comprises an Editing control 4231. In some embodiments, in response to triggering an Edit control by the user, second attribute information set by the user for a corresponding second media content is acquired.

In some embodiments, if the attribute information includes a cover, one or more frames in a corresponding second media content are displayed; then, a frame selected by the user is determined as the cover of the corresponding second media content. Thus, the user can quickly set the cover. In addition, the cover can also be selected in a default way and automatically displayed, for example, by selecting the first frame of the video, or selecting according to a preset algorithm, and so on, which will not be repeated here.

In some embodiments , a real-time preview interface of the media content collection is displayed before publishing the media content collection comprising the attribute information and second media content(s). Thus, the user can more intuitively observe an interface with the published media content collection, so as to facilitate the adjustment of the content to be published, thus saving the user's operation and interaction times, and saving network and computing resources.

In some embodiments, the preview interface is a preview of the display interface of the media content collection after a viewer of the first media content performs an interactive operation on the link. For example, after the viewer clicks the link, information of the media content collection is displayed. Thus, the user can make more accurate adjustments to the media content collection from the perspective of the viewer.

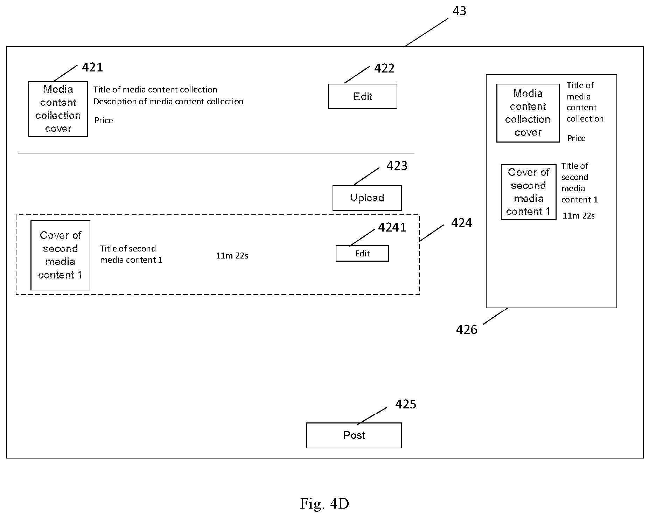

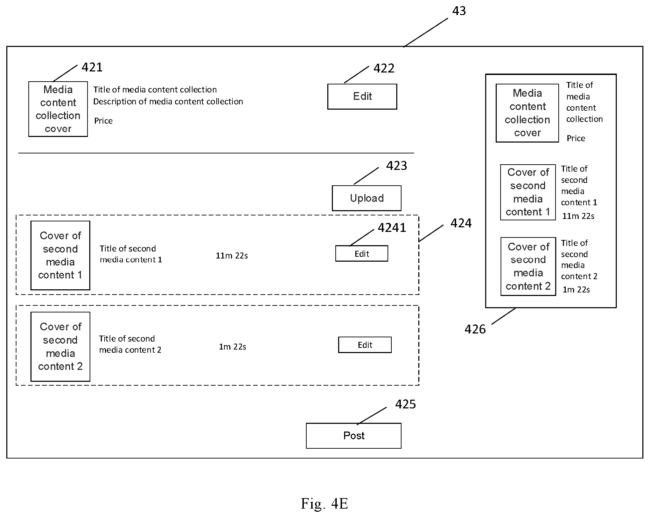

Referring to FIGS. 4D and 4E, schematic diagrams of a preview interface displayed on the second publishing interface of the media content collection are shown. As shown in FIGS. 4D and 4E, the second publishing interface 43 also comprises a preview interface 426. Upon the uploading of a second media content 1, the preview interface 426 displays the second media content 1, as shown in FIG. 4D; Upon the uploading of a second media content 2, the preview interface 426 displays the second media content 2, as shown in FIG. 4E.

After the user completes operations such as uploading and setting attribute information, the Publish control 425 can be triggered to publish the media content collection. Before associating the published media content collection with the first media content, the viewer can, for example, view its basic information through the home page of the user who published the media content collection, and view or listen to the second media content after an unlocking operation.

FIGS. 4B to 4E are only an example in which the publishing process of the media content collection is divided into two interfaces. Those skilled in the art can adopt any number of publishing interfaces to publish the media content collection as needed.

After the user has published the media content collection, it can be reviewed by the platform as needed, and a corresponding state can be displayed in the management interface of the media content collection in a case of pending review, approved review, or not-approved review. In addition, a corresponding state can be also displayed for a media content collection that is temporarily saved as a draft or deleted after publication.

In some embodiments, the state of the media content collection is displayed in a first management interface of the user's media content collection.

In some embodiments, the state of each second media content in the media content collection is displayed in a second management interface of the user's media content collection. Since a media content collection may comprise multiple second media contents, if one of the second media contents fails to pass the review, the entire media content collection will fail to pass the review. By displaying the state of each second media content in the media content collection, the user can quickly locate the specific reason for a corresponding state of the media content collection.

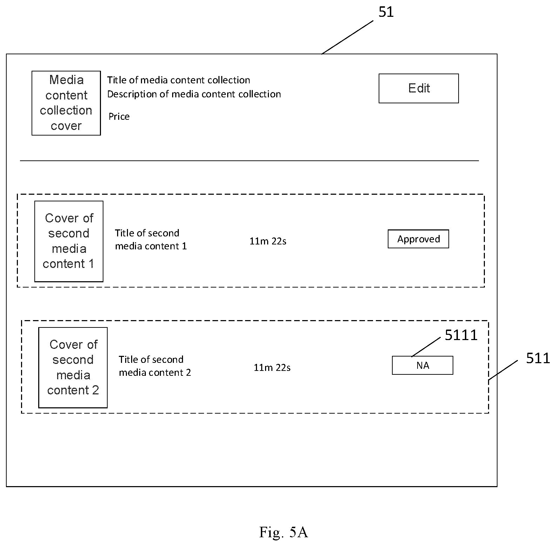

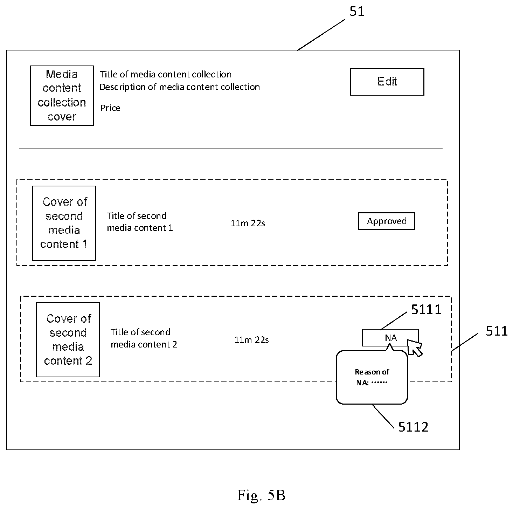

FIGS. 5A and 5B show schematic diagrams of a second management interface of a media content collection according to some embodiments of the present disclosure. As shown in FIGS. 5A and 5B, the second management interface 51 of the media content collection displays a second entry component 511 of one or more second media contents in the media content collection, which comprises a State control 5111.

In some embodiments, in a case where the State control represents a determined state, the reason why a corresponding second media content is in the determined state is displayed in response to the user's interaction with the State control in a determined manner.

Given that the determined interaction is hovering the cursor over the State control, FIG. 5A shows a situation in a case where the user does not interact with the State control 5111 in the preset manner; and FIG. 5B shows a situation in a case where the user interacts with the State control 5111 in the determined manner, a floating window control 5112 is displayed in an area adjacent to the State control 5111, in which the reason why the state of the second media content 2 is "NA (Not-Approved)" is displayed.

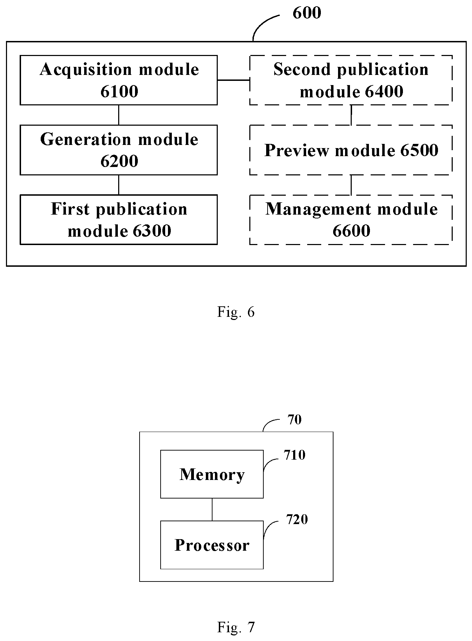

An embodiment of a media content publishing apparatus of the present disclosure will be described below with reference to FIG. 6.

FIG. 6 shows an exemplary structural diagram of a media content publishing apparatus according to some embodiments of the present disclosure. As shown in FIG. 6, the publishing apparatus of media content 600 of this embodiment comprises: an acquisition module 6100 configured for acquiring a first media content to be published by a user; a generation module 6200 configured for generating a link associated with the first media content, wherein the link directs to a media content collection to be unlocked of the user, and the media content collection comprises one or more second media contents; and a first publication module 6300 configured for publishing the first media content with the link to a feed.

In some embodiments, the generation module 6200 is further configured for acquiring the media content collection selected by the user; generating the link according to the media content collection selected by the user; and displaying the link in a publishing interface of the first media content.

In some embodiments, the generation module 6200 is further configured for displaying one or more media content collections of the user in response to a control for adding a link in the publishing interface being triggered by the user, wherein each of the media content collections has a Selection control; and acquiring the media content collection selected by the user in response to a Selection Confirmation control being triggered by the user.

In some embodiments, the generation module 6200 is further configured for displaying a Link control in the publishing interface of the first media content, wherein the Link control comprises partial or complete of a title of the media content collection selected by the user.

In some embodiments, the publishing apparatus 600 further comprises: a second publication module 6400 configured for publishing the media content collection before generating the link associated with the first media content.

In some embodiments, the second publication module 6400 is configured for acquiring first attribute information input by the user for the media content collection; acquiring the second media content(s) uploaded by the user; and publishing the media content collection comprising the first attribute information and the second media content(s).

In some embodiments, the publishing apparatus 600 further comprises a preview module 6500 configured for displaying a real-time preview interface of the media content collection before publishing the media content collection comprising the attribute information and the second media content.

In some embodiments, the preview module 6500 is further configured for updating the preview interface of the media content collection in response to a detection of the user's operation of inputting the first attribute information or uploading the second media content.

In some embodiments, the preview interface is a preview of a display interface of the media content collection after a viewer of the first media content performs an interactive operation on the link.

In some embodiments, the attribute information of the media content collection comprises at least one of a title, a redeemable resource, a description or a cover.

In some embodiments, the second publication module 6400 is further configured for, in a case where the attribute information of the media content collection comprises a redeemable resource, displaying one or more Resource controls corresponding to different redeemable resource values, wherein each of the Resource controls comprises information determined from a geographic location and a corresponding redeemable resource value of the user; and acquiring a redeemable resource value corresponding to the Resource control selected by the user.

In some embodiments, the second publication module 6400 is further configured for displaying an Upload control and first entry component(s) of the uploaded second media content(s) in an uploading interface of the second media content(s), wherein the first entry component comprises an Edit control; acquiring the second media content(s) uploaded by the user in response to triggering the Upload control by the user; and acquiring second attribute information set by the user for the corresponding second media content(s) in response to the triggering of the Edit control by the user.

In some embodiments, the second attribute information comprises a cover, and the second publication module 6400 is further configured for displaying one or more frames of the corresponding second media content; and determining a frame selected by the user as a cover of the corresponding second media content.

In some embodiments, the publishing apparatus 600 further comprises a management module 6600 configured for displaying a state of the media content collection in a first management interface of the user's media content collection; and displaying a state of each second media content in the media content collection in a second management interface of the user's media content collection.

In some embodiments, the management module 6600 is further configured for displaying a second entry component of the one or more second media contents in the media content collection in the second management interface of the media content collection of the user, wherein the second entry component comprises a State control; and in a case where the State control represents a determined state, displaying the reason why a corresponding second media content is in the preset state in response to an interaction of the user with the State control being in a preset manner.

In some embodiments, the first media content and the second media contents are videos.

In some embodiments, the publishing apparatus 600 of media content may be deployed in a distributed manner. For example, the acquisition module 6100, the generation module 6200 and the first publishing module 6300 are deployed on a terminal device, and the second publishing module 6400, the preview module 6500 and the management module 6600 are deployed on a personal computer (PC) device.

FIG. 7 shows an exemplary structural diagram of a publishing apparatus of media content according to other embodiments of the present disclosure. As shown in FIG. 7, the publishing apparatus 70 of this embodiment comprises: memory 710 and a processor 720 coupled to the memory 710, the processor 720 configured to, based on instructions stored in the memory 710, carry out the publishing method of media content of any one of the above embodiments.

The memory 710 may include, for example, system memory, a fixed non-volatile storage medium, or the like. The system memory stores, for example, an operating system, application programs, a boot loader, and other programs.

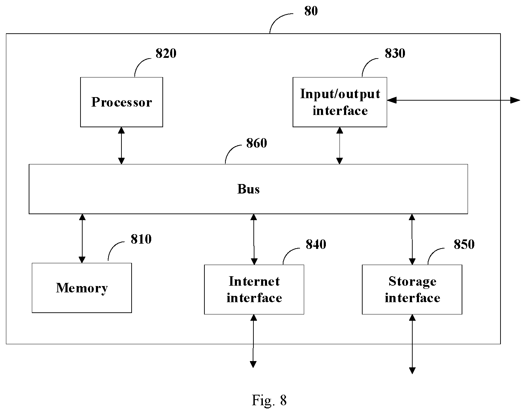

FIG. 8 shows an exemplary structural diagram of a publishing apparatus of media content according to still other embodiments of the present disclosure. As shown in FIG. 8, the publishing apparatus 80 of this embodiment comprises: memory 810 and a processor 820, and may further comprise an input-output interface 830, a network interface 840, a storage interface 850, and the like. These interfaces 830, 840, 850, the memory 810 and the processor 820 may be connected through a bus 860, for example. The input-output interface 830 provides a connection interface for input-output devices such as a display, a mouse, a keyboard, and a touch screen. The network interface 840 provides a connection interface for various networked devices. The storage interface 850 provides a connection interface for external storage devices such as an SD card and a USB flash disk.

An embodiment of the present disclosure further provides a computer-readable storage medium on which a computer program is stored, characterized in that the program when executed by a processor implements any one of the foregoing publishing methods of media content.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical storage device, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The above is merely preferred embodiments of this disclosure, and is not limitation to this disclosure. Within spirit and principles of this disclosure, any modification, replacement, improvement and etc. shall be contained in the protection scope of this disclosure.

## Claims

1. A publishing method of media content, comprising:
acquiring a first media content to be published by a user;
generating a link associated with the first media content, wherein the link directs to a media content collection to be unlocked of the user, and the media content collection comprises one or more second media contents; and
publishing the first media content with the link to a feed.

2. The publishing method according to claim 1, wherein the generating a link associated with the first media content comprises:
acquiring the media content collection selected by the user;
generating the link according to the media content collection selected by the user; and
displaying the link in a publishing interface of the first media content.

3. The publishing method according to claim 2, wherein the acquiring a media content collection selected by the user comprises:
displaying one or more media content collections of the user in response to a control for adding a link in the publishing interface being triggered by the user, wherein each of the media content collections has a Selection control; and
acquiring the media content collection selected by the user in response to a Selection Confirmation control being triggered by the user.

4. The publishing method according to claim 2 or 3, wherein the displaying the link in a publishing interface of the first media content comprises:
displaying a Link control in the publishing interface of the first media content, wherein the Link control comprises partial or complete of a title of the media content collection selected by the user.

5. The publishing method according to any one of claims 1 to 4, further comprising:
publishing the media content collection before generating the link associated with the first media content.

6. The publishing method according to claim 5, wherein the publishing the media content collection comprises:
acquiring first attribute information input by the user for the media content collection;
acquiring the second media content(s) uploaded by the user; and
publishing the media content collection comprising the first attribute information and the second media content(s).

7. The publishing method according to claim 6, further comprising:
displaying a real-time preview interface of the media content collection before publishing the media content collection comprising the attribute information and the second media content.

8. The publishing method according to claim 7, wherein the displaying a real-time preview interface of the media content collection comprises:
updating the preview interface of the media content collection in response to a detection of the user's operation of inputting the first attribute information or uploading the second media content.

9. The publishing method according to claim 7 or 8, wherein the preview interface is a preview of a display interface of the media content collection after an interactive operation on the link is performed by a viewer of the first media content.

10. The publishing method according to any one of claims 6 to 9, wherein the attribute information of the media content collection comprises at least one of a title, a redeemable resource, a description or a cover.

11. The publishing method according to any one of claims 6 to 10, wherein in a case where the attribute information of the media content collection comprises a redeemable resource, the acquiring first attribute information input by the user for the media content collection comprises:
displaying one or more Resource controls corresponding to different redeemable resource values, wherein each of the Resource controls comprises information determined from a geographic location and a corresponding redeemable resource value of the user; and
acquiring a redeemable resource value corresponding to the Resource control selected by the user.

12. The publishing method according to any one of claims 6 to 11, wherein the acquiring second media content(s) uploaded by the user comprises:
displaying an Upload control and first entry component(s) of the uploaded second media content(s) in an uploading interface of the second media content(s), wherein the first entry component comprises an Edit control;
acquiring the second media content(s) uploaded by the user in response to triggering the Upload control by the user; and
acquiring second attribute information set by the user for the corresponding second media content(s) in response to the triggering of the Edit control by the user.

13. The publishing method according to claim 12, wherein the second attribute information comprises a cover, and the acquiring second attribute information set by the user for the corresponding second media content comprises:
displaying one or more frames of the corresponding second media content; and
determining a frame selected by the user as a cover of the corresponding second media content.

14. The publishing method according to any one of claims 1 to 13, further comprising:
displaying a state of the media content collection in a first management interface of the user's media content collection; and
displaying a state of each second media content in the media content collection in a second management interface of the user's media content collection.

15. The publishing method according to claim 14, wherein the displaying a state of each second media content in the media content collection in a second management interface of the user's media content collection comprises:
displaying a second entry component of the one or more second media contents in the media content collection in the second management interface of the media content collection of the user, wherein the second entry component comprises a State control; and
in a case where the State control represents a determined state, displaying the reason why a corresponding second media content is in the preset state in response to an interaction of the user with the State control being in a preset manner.

16. The publishing method according to any one of claims 1 to 15, wherein the first media content and the second media contents are videos.

17. A publishing apparatus of media content, comprising:
memory; and
a processor coupled to the memory, the processor configured to, based on instructions stored in the memory, carry out the publishing method of media content according to any one of claims 1 to 16.

18. A computer-readable storage medium on which a computer program is stored, which when executed by a processor implements the publishing method of media content according to any one of claims 1 to 16.

19. A computer program product that when running on a computer causes the computer to implement the publishing method of media content according to any one of claims 1 to 16.

20. A computer program, comprising:
instructions that, when executed by a processor, cause the processor to perform the publishing method of media content according to any one of claims 1 to 16.
